# FASCICULE DE BREVET EUROPEEN

(11) **EP 2 233 367 B1**
(45) Date de publication et mention de la délivrance du brevet: **21.03.2012**
(21) Numéro de dépôt: 09306191.9
(22) Date de dépôt: 08.12.2009
(51) Int. Cl.: B60R 19/12, B62D 21/15, B62D 25/08

(54) **Module de face avant de véhicule automobile comprenant un cadre structurel et un bouclier**
Frontenmodul eines Kraftfahrzeuges umfassenden einen Tragrahmen und einen Stossfänger
Front face module for motorvehicle comprising a structural frame and a bumper

(30) Priorité: 26.03.2009 FR 0901440
(43) Date de publication de la demande: 29.09.2010
(73) Titulaire: Faurecia Bloc Avant, 92000 Nanterre (FR)
(72) Inventeur: Gonin, Vincent, 25600, SOCHAUX (FR); Dufee, Julien, 90340 Novillard (FR); Droz-Bartholet, Laurent, 70400, HERICOURT (FR)
(74) Mandataire: Jacobson, Claude

(56) Documents cités:
- EP-A- 1 095 844
- EP-B- 1 032 526
- WO-A-2007/028908
- FR-A- 2 810 940

## Description

La présente invention concerne un module de face avant pour véhicule automobile du type destiné à être fixé sur des brancards et des prolonges de berceau du châssis du véhicule automobile, ledit module comprenant un cadre structurel en matériau plastique comprenant au moins une traverse inférieure et des montants verticaux, chacun desdits montants formant, sur au moins une partie de sa hauteur un élément déformable d'absorption d'énergie, le module comprenant en outre un bouclier en matériau plastique, conformé pour épouser la forme d'une peau de bouclier et disposé contre le cadre structurel, ledit bouclier comprenant une traverse supérieure et une traverse inférieure reliées entre elles par des poutres de liaison verticales, les traverses supérieure et inférieure présentant chacune une partie centrale et deux parties latérales disposées de part et d'autre de la partie centrale, lesdites traverses comprenant une pluralité de nervures. Les documents FR-A-2 810 940 et EP-A-1 0958 44 donnent des exemples de module de face avant en accord avec le préambule de la revendication 1.

La présente invention concerne également un véhicule automobile comprenant un tel module de face avant.

Les modules de face avant de véhicule automobile sont agencés pour répondre de façon convenable aux différents types de chocs contre le véhicule automobile, tel que les chocs « piéton » aux alentours de 40 km/h, les chocs « parking » aux alentours de 4 km/h (ECE42) et les chocs « réparabilité » aux alentours de 15 km/h (Danner) tout en réduisant les coûts de fabrication.

Afin d'assurer une absorption de l'énergie, un grand nombre d'éléments sont prévus pour répondre au mieux selon le type de choc subi par le véhicule. On prévoit par exemple un absorbeur de choc pour le choc piéton, sous la forme d'un élément déformable élastiquement agencé pour s'écraser en cas de collision avec un piéton, au moins une poutre transversale métallique pour le choc parking et des éléments déformables d'absorption d'énergie métalliques, ou « crashbox », pour les chocs réparabilité. Ce grand nombre d'éléments complexifie la réalisation du module de face avant et ajoute en outre un poids important sur le véhicule automobile, notamment du fait des éléments métalliques prévus.

Le but de l'invention est de proposer un module de face avant permettant une absorption de choc satisfaisante tout en réduisant le nombre d'éléments et pouvant être obtenu à faible coût et à masse réduite.

A cet effet, l'invention concerne un module de face avant du type précité, dans lequel la concentration de nervures dans la partie centrale de la traverse supérieure et/ou de la traverse inférieure est supérieure à la concentration de nervures de chaque partie latérale de la traverse supérieure et/ou de la traverse inférieure.

Un tel module de face avant permet de réduire grandement le nombre d'éléments formant le module et de se passer d'une poutre transversale métallique, ce qui réduit la masse du module. De plus, le bouclier permet de se passer de l'absorbeur de choc pour le choc piéton. Ainsi, le module de face avant selon l'invention permet de répondre aux différents types de choc de façon satisfaisante.

Selon d'autres caractéristiques du module de face avant :
- les nervures définissent des alvéoles, au moins une partie des alvéoles traversant longitudinalement la traverse supérieure et la traverse inférieure ;
- la partie centrale de la traverse supérieure, respectivement de la traverse inférieure, s'étend sur une largeur sensiblement comprise entre 400 mm et 600 mm au centre de la traverse supérieure, respectivement de la traverse inférieure ;
- les nervures de la partie centrale de la traverse supérieure et/ou inférieure sont espacées d'une distance sensiblement comprise entre 45 mm et 90 mm et les nervures des parties latérales de la traverse supérieure et/ou inférieure sont espacées d'une distance sensiblement comprise entre 60 mm et 120 mm ;
- les poutres de liaison verticales présentent une structure alvéolaire formée d'alvéoles s'étendant longitudinalement au travers des poutres et débouchant sur la face arrière et/ou avant du bouclier ;
- chaque poutre de liaison comprend des premières alvéoles borgnes, fermées du côté de la face arrière et ouvertes du côté de la face avant, et des deuxième alvéoles borgnes ouvertes du côté de la face arrière et fermée du côté de la face avant ;
- le module de face avant comprend en outre deux platines métalliques rigides, dont une face est destinée à s'appuyer sur des brancards et des prolonges de berceau du châssis du véhicule automobile, les montants verticaux du cadre structurel étant disposés contre l'autre face desdites platines ;
- la face avant du bouclier est pourvue d'une pluralité de moyens de fixation permettant la fixation d'une peau de bouclier et/ou d'accessoires du véhicule automobile sur ledit bouclier ;
- le bouclier est monobloc ; et
- les traverses supérieure et inférieure du bouclier comprennent au moins une partie faisant saillie vers l'avant par rapport aux poutres de liaison verticales.

L'invention concerne également un véhicule automobile comprenant un châssis pourvu de brancards et de prolonges de berceau, dans lequel un module de face avant tel que décrit ci-dessus est fixé auxdits brancards et auxdites prolonges de berceau.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective éclatée d'un module de face avant selon l'invention,
- la Fig. 2 est une représentation schématique en perspective du bouclier du module de face avant de la Fig. 1, la face avant du bouclier étant visible,
- la Fig. 3 est une représentation schématique en perspective du bouclier du module de face avant de la Fig. 1, la face arrière du bouclier étant visible,
- la Fig. 4 est une représentation schématique de face du bouclier de la Fig. 2, la face avant du bouclier étant visible,
- la Fig. 5 est une représentation schématique de face du bouclier de la Fig. 2, la face arrière du bouclier étant visible.

Dans la description, les termes « longitudinal », « transversal », « avant », « arrière », « horizontal » et « vertical » sont définis selon les directions usuelles d'un véhicule automobile monté.

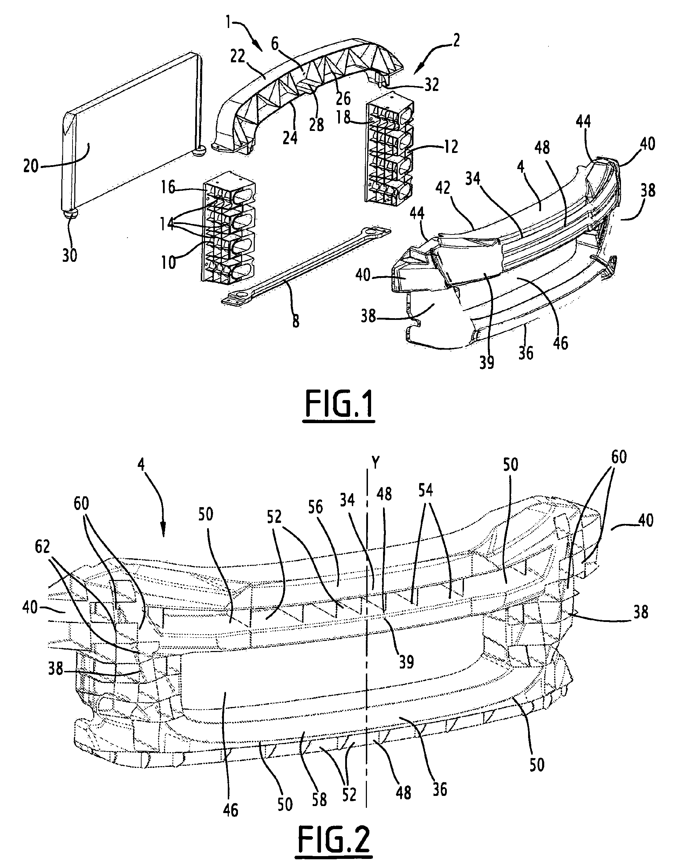

En référence à la Fig. 1, on décrit un module de face avant 1 comprenant essentiellement un cadre structurel 2 et un bouclier 4. Le module de face avant 1 est destiné à être fixé sur des brancards et des prolonges de berceau du châssis (non représenté) du véhicule automobile. Pour des raisons de simplicité, la structure du bouclier 4 n'a pas été entièrement représentée sur la Fig. 1.

Le cadre structurel 2 participe à la rigidité de la caisse du véhicule. Il comprend une traverse supérieure 6, une traverse inférieure 8, et des montants verticaux droit 10 et gauche 12.

Le montant vertical droit 10, respectivement le montant vertical gauche 12, du cadre structurel 2 est constitué par une pluralité d'éléments déformables 14. Dans le mode de réalisation envisagé, quatre éléments déformables 14 sont superposés selon la direction verticale. Dans une variante de réalisation, un montant vertical est constitué par une rampe déformable continue. Un élément ou une rampe déformable est une structure sensiblement parallélépipédique apte à absorber, en s'écrasant selon son épaisseur, une fraction de l'énergie d'un choc.

La face arrière d'un montant vertical 10, 14 vient en appui sur l'essentiel de la surface d'une platine métallique 16, 18 étendue reliant, d'un même côté du véhicule, les extrémités d'une prolonge de berceau située à un niveau inférieur et d'un brancard situé à un niveau plus élevé.

La traverse inférieure 8 du cadre structurel 2 relie les deux éléments d'absorption 14 les plus bas de chacun des montants verticaux 10 et 12. La traverse inférieure 8 a une section de forme générale rectangulaire. La portion centrale de la traverse inférieure 8 est amincie selon la direction verticale, de sorte que sa face supérieure présente un logement de réception d'un ensemble de refroidissement, indiqué de manière générale par la référence 20. L'ensemble de refroidissement 20 comporte par exemple un groupe motoventilateur et un radiateur. La traverse inférieure 8 est avantageusement réalisée en matière plastique. En variante, cette traverse peut être métallique, et liée directement à l'extrémité inférieure de chacune des prolonges de berceau, de manière à accroitre sa participation à la cohésion et à la rigidité de la caisse, en situation de roulage ou de crash.

La traverse supérieure 6 du cadre structurel 2 relie les deux éléments déformables 14 les plus hauts des montants verticaux droit 10 et gauche 12. La traverse supérieure 6 est de forme générale en arche. La traverse supérieure 6, en tant que poutre à treillis, comporte une membrure supérieure 22 et une membrure inférieure 24 reliées entre elles par des nervures de renfort 26. Les nervures de renfort sont disposées de manière à former des caissons intérieurs triangulaires. La section de la traverse supérieure 6, dans le plan vertical médian, présente une forme en losange, avec un côté supérieur disposé essentiellement horizontalement et correspondant à la membrure supérieure 22, un côté inférieur correspondant à la membrure inférieure 24, et des côtés avant et arrière inclinés vers le haut et vers l'arrière du véhicule. La traverse supérieure 6 sort ainsi vers l'arrière du plan vertical défini par la traverse inférieure 8 et les montants verticaux 10 et 12. La géométrie dévoilée ci-dessus l'est à titre d'exemple constitue un exemple non limitatif de réalisation.

La membrure supérieure 22 de la traverse supérieure 6 est adaptée pour coopérer avec un élément de carrosserie du véhicule et en particulier avec un capot de celui-ci. Une face intérieure du capot, orientée vers l'intérieur du véhicule, vient couvrir la membrure supérieure 22, qui est conformée à cet effet.

Une portion médiane de la traverse supérieure 6 présente un logement 28 de réception de moyens de fermeture du capot destinés à coopérer avec des moyens de fermeture conjugués prévus sur le capot.

Des moyens de maintien de l'ensemble de refroidissement 20 sont prévus sur la membrure inférieure 24 de la traverse supérieure 6. Dans un mode de réalisation particulièrement avantageux du module de face avant, le bord inférieur de l'ensemble de refroidissement 20 est relié à la traverse inférieure 8 par des languettes de fixation 30, tandis que le bord supérieur du radiateur 20 est relié par des languettes de fixation 32 à la traverse supérieure 6. Les languettes 30, 32 sont avantageusement frangibles ou fusibles, de manière à préserver l'ensemble de refroidissement 20 en choc moyenne vitesse en désolidarisant l'ensemble de refroidissement du cadre structurel 2 en cas de choc.

Compte tenu des spécificités du bloc avant, en grande partie obtenu en matières plastiques, la noix destinée à la fixation de l'anneau d'arrimage, traditionnellement fixée sur la poutre supérieure de bouclier ou intégrée à un élément d'absorption supérieur, sera avantageusement située au niveau de la platine métallique géante ou directement fixée sur le brancard supérieur.

Le cadre structurel 2 monobloc est de préférence réalisé en une matière plastique, par exemple par injection d'un matériau thermoplastique. Les traverses supérieure 6 et inférieure 8 et les montants verticaux 10 et 12 sont venus de matière. En variante, la traverse inférieure 8 et les montants verticaux 10 et 12 sont venus de matière pour former une pièce en « U », puis la traverse supérieure 6 est fixée, par exemple par collage, sur la partie supérieure des montants verticaux 10, 12. Dans encore une autre variante et selon le mode de réalisation représenté sur la Fig. 1, les montants verticaux 10, 12 sont moulés puis fixés à la traverse inférieure 8, par exemple par collage, pour former une pièce en « U », sur laquelle on vient ensuite fixer la traverse supérieure 6.

Le bouclier 4 est disposé contre le cadre structurel 2 vers l'avant de celui-ci. Ce bouclier 4 est par exemple une pièce monobloc réalisée en matière plastique. Le bouclier 4 comprend une traverse supérieure 34 et une traverse inférieure 36 s'étendant sensiblement horizontalement et transversalement et reliées entre elles à chacune de leurs extrémités par une poutre de liaison sensiblement verticale 38.

La forme générale du bouclier 4 est conformée pour épouser la forme d'une peau de bouclier (non représentée) et destinée à être fixée sur la face avant 39 du bouclier 4. Le bouclier 4 est destiné à s'étendre sur toute la largeur de la face avant du véhicule automobile d'une aile à l'autre dudit véhicule.

La traverse supérieure 34 est disposée sensiblement au droit des éléments d'absorption 14 les plus haut des montants 10 et 12 du cadre 2 et s'étend entre ces éléments 14. Selon un mode de réalisation, la traverse supérieure 34 comprend en outre des parties extrêmes 40 s'étendant au-delà des poutres de liaison 38 de part et d'autre du bouclier. Ces derniers éléments, optionnels, ont idéalement vocation à supporter des projecteurs, éléments de peau de bouclier ou des accessoires annexes.

La traverse inférieure 36 est disposée sensiblement au droit des éléments d'absorption 14 les plus bas des montants 10 et 12 du cadre 2 et s'étend entre ces éléments 14.

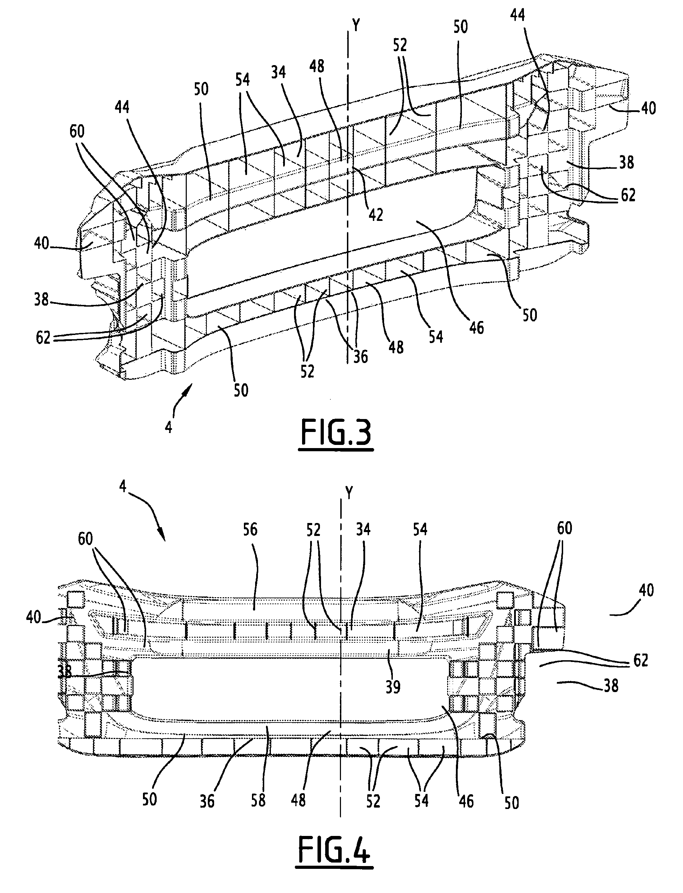

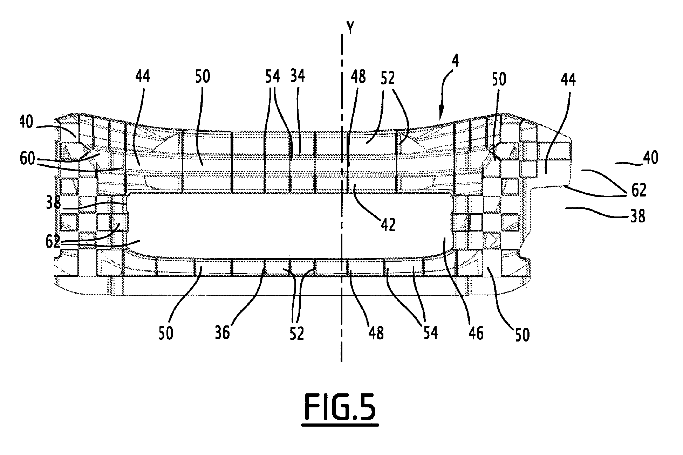

Comme représenté sur les Fig. 3 et 5, la face arrière 42 du bouclier 4 comprend des zones 44 de réception des montants 10 et 12. Ces zones 44 constituent deux larges rails verticaux et sont disposées sensiblement derrière les poutres de liaison verticales 38.

Les traverses supérieure 34 et inférieure 36 présentent une forme galbée vers l'avant. Ainsi, ces traverses 34 et 36 présentent une partie en saillie vers l'avant par rapport aux poutres de liaison 38. Une ouverture centrale 46 est prévue entre les traverses 34 et 36 et les poutres de liaison 38 de sorte à laisser passer l'air vers le châssis du véhicule automobile.

Les traverses supérieure 34 et inférieure 36 s'étendent selon la direction transversale sur sensiblement toute la largeur du bouclier 4 et comprennent chacune une partie centrale 48 et deux parties latérales 50 s'étendant de part et d'autre de la partie centrale 48. La partie centrale 48 s'étend jusqu'à une distance sensiblement égale à 200 mm ou 300 mm de part et d'autre d'un axe central vertical Y du bouclier, soit sur une largeur sensiblement comprise entre 400 mm et 600 mm au centre de la traverse supérieure 34, respectivement de la traverse inférieure 36. Les parties latérales 50 s'étendent de chaque côté de la partie centrale 48 sur le reste de la largeur des traverses 34 et 36. Les parties latérales 50 sont sensiblement symétriques l'une de l'autre par rapport à la partie centrale 48.

Les parties centrale 48 et latérales 50 comprennent une pluralité de nervures 52 s'étendant en hauteur et agencées pour former des alvéoles 54 s'étendant entre la face avant 39 et la face arrière 42 du bouclier 4. Dans une configuration particulière, une partie de ces alvéoles traverse le bouclier et peut laisser passer l'air de l'avant vers l'arrière du bouclier 4 de manière à constituer une entrée d'air additionnelle, destinée à venir en correspondance avec une ou plusieurs ouvertures de la peau de bouclier.

La concentration de nervures 52 dans la partie centrale 48 est plus grande que la concentration de nervures 52 dans les parties latérales 50. C'est-à-dire que les nervures 52 sont moins espacées les unes des autres dans la partie centrale 48 que dans les parties latérales 50. Ainsi, la partie centrale 48 comprend par exemple entre quatre et six nervures 52 espacées les unes des autres d'une distance sensiblement comprise entre 45 mm et 90 mm. Les parties latérales 50 comprennent par exemple chacune entre deux et quatre nervures 52 espacées les unes des autres d'une distance sensiblement comprise entre 60 mm et 120 mm.

Une telle répartition des nervures 52 permet de définir le comportement du bouclier 4 en cas de choc. Notamment, le comportement du bouclier 4 est différent selon le point d'impact sur ce bouclier 4 en cas de choc. Le bouclier 4 selon l'invention permet de respecter les normes en cas de choc piéton qui sont de plus en plus exigeantes. Notamment, on doit s'assurer que la décélération du genou d'un piéton en cas de choc piéton doit demeurer inférieure à 150g quel que soit le point d'impact du genou.

Ainsi, si l'impact est centré, c'est à dire que le point d'impact se trouve dans la partie centrale 48 des traverses 34 et 36 dans une zone centrale s'étendant sur une largeur de 200 mm de part et d'autre de l'axe central Y du bouclier, la réduction de la décélération se fait par flexion pure des traverses 34 et 36 sur une course longitudinale sensiblement comprise entre 50 mm et 70 mm.

Si l'impact est périphérique, c'est-à-dire que le point d'impact se trouve dans une des parties latérales 50 des traverses 34 et 36 dans une zone périphérique espacée de plus de 300 mm de l'axe central Y du bouclier, la réduction de la décélération se fait pas compression pure très localisée d'une poutre de liaison verticale 38 ou d'une partie latérale 50 des traverses 34 et 36 sur une course longitudinale sensiblement égale à 50 mm.

Si l'impact est médian, c'est-à-dire que le point d'impact se trouve dans une zone s'étendant entre la zone centrale et la zone périphérique, la réduction de la décélération se fait par la combinaison de la flexion et de la compression localisée des traverses 34 et 36 sur une course longitudinale sensiblement égale à 50 mm. L'agencement particulier des nervures, plus écartées les unes des autres et avantageusement en léger retrait par rapport à la paroi externe du bouclier, participe à cette souplesse localisée des parties latérales du bouclier.

Le comportement du bouclier permet ainsi de se passer d'absorbeur souple d'absorption de l'énergie en cas de choc piéton.

Sur la face avant 39 du bouclier 4, la traverse supérieure 34 comprend un méplat 56 s'étendant sensiblement dans la partie centrale 48 de la traverse 34 au dessus des nervures 52, comme représenté sur les Fig. 2 et 4. Sur la face arrière 42 du bouclier 4, les nervures 52 de la traverse supérieure 34 s'étendent sur sensiblement toute la hauteur de la traverse 34, comme représenté sur les Fig. 3 et 5. De même, sur la face avant 39 du bouclier 4, la traverse inférieure 36 comprend un méplat 58 s'étendant sensiblement dans la partie centrale 48 de la traverse 34 au dessus des nervures 52, comme représenté sur les Fig. 2 et 4. Ces choix géométriques ne sont en aucun cas limitatifs.

Chaque poutre de liaison verticale 38 présente une structure alvéolaire comprenant des alvéoles 60, 62 s'étendant longitudinalement entre la face arrière 42 et la face avant 39 du bouclier 4.

Chaque poutre de liaison 38 comprend des alvéoles borgnes inversés comprenant des premiers alvéoles 60 borgnes, fermés du côté de la face arrière 42 et ouverts du côté de la face avant 39, et des deuxième alvéoles 62 borgnes ouverts du côté de la face arrière 42 et fermé du côté de la face avant 39. Les premiers alvéoles 60 et les deuxièmes alvéoles 62 sont disposés en quinconce (ou damier). Ce type d'architecture permet de réduire très significativement les dépouilles, voire de les éliminer, tout en facilitant le démoulage. Cette géométrie présente donc un intérêt économique en simplifiant le process d'injection tout en réduisant la masse de la pièce par réduction des surépaisseurs en base de nervure. D'autre part et surtout, cette absence de dépouille autorise une homogénéité des épaisseurs de paroi en tout point des alvéoles 60, 62 des poutres de liaison verticales 38, ce qui bénéficie au comportement en crash desdits montants. En effet, l'obtention d'alvéoles en quinconce d'épaisseur constante permet d'obtenir une force d'enfoncement homogène en situation de choc moyenne vitesse (Danner), ce qui constitue une caractéristique très recherchée pour améliorer la compacité et optimiser la dissipation d'énergie tout en préservant les éléments de structure (brancards et prolonges).

La structure alvéolaire des poutres de liaison 38 leur confère une capacité d'absorption d'énergie suffisante avec une épaisseur (dimension suivant la direction longitudinale) faible.

Les poutres de liaison 38 présentent une épaisseur avantageusement comprise entre 100 et 200 mm. Ceci permet une absorption d'énergie efficace, tout en limitant le porte-à-faux du module de face avant 1 pris entre les platines 16 et l'extrémité avant du bouclier 4. Il est important de noter que l'ensemble constitué par les rampes d'absorption du cadre structurel et les poutres de liaison verticales du bouclier, d'un côté du véhicule, travaillent en combinaison pour dissiper la majeure partie de l'énergie en choc Danner, soit une fraction supérieure à 75%. Les poutres de liaison et les rampes se partagent idéalement cette fraction d'énergie de manière équitable, mais cet équilibre de dissipation peut évidemment être déplacé vers l'une ou l'autre des deux pièces.

La structure alvéolaire des poutres de liaison verticales 38, ou jambages, permet donc d'améliorer le comportement du bouclier en cas de choc Danner.

Une peau de bouclier (non représentée) est fixée sur la face avant du bouclier 4 de sorte à recouvrir sensiblement celui-ci et à conférer un aspect esthétique satisfaisant à l'avant du véhicule automobile. Selon un mode de réalisation, la peau de bouclier est réalisée en une pluralité de panneaux conformés pour former la peau. Ces panneaux sont de faible épaisseur, par exemple sensiblement comprise entre 1.5 mm et 3 mm, ce qui réduit la masse et l'encombrement de la peau. Une telle épaisseur peut être prévue car la peau de bouclier ne remplit pas de fonction structurelle dans l'absorption des chocs, cette fonction étant remplie par le bouclier 4 et le cadre structurel 2. La peau n'a donc qu'une fonction esthétique, ce qui permet de réduire son épaisseur afin de réduire sa masse et son coût de fabrication.

La face avant du bouclier 4 reçoit en outre des accessoires fonctionnels (non représentés) du véhicule automobile, tel que les blocs optiques, un grille d'aération reçue dans l'ouverture 46 et éventuellement des volets pilotés disposés derrière la grille et permettant de guider l'air de façon optimale.

Afin d'assurer la fixation de ces divers éléments, la face avant 39 du bouclier 4 est pourvue d'une pluralité de moyens de fixation permettant la fixation des panneaux de la peau de bouclier et des accessoires du véhicule automobile. Ces moyens de fixation sont par exemple formés par des gorges et des orifices de réception d'éléments de fixation complémentaires prévus sur les panneaux et sur les accessoires du véhicule automobile, ce qui permet le montage et le démontage des panneaux et des accessoires à volonté. Ces éléments de fixation sont par exemple venus de matière avec les panneaux.

Le bouclier 4 peut être réalisé de façon simple par injection d'une matière plastique dans un moule. Il peut être démoulé suivant une unique direction correspondant à la direction longitudinale du véhicule automobile lorsque le bouclier 4 est fixé sur le châssis. Ainsi, le module 1 peut être obtenu de façon simple, avec un coût de fabrication faible. La structure alvéolaire des poutres de liaison verticales 38 permet des dépouilles faibles ce qui permet de limiter le poids et le coût de fabrication du bouclier 4.

Le module de face avant décrit ci-dessus permet de se passer d'une poutre transversale métallique et d'éléments d'absorption souples pour piéton. On réduit ainsi la masse et l'encombrement du module de face avant 1. Pour accroitre la cohésion du véhicule en situation de choc ou éviter un écartement des brancards, il reste néanmoins envisageable, selon les architectures, d'ajouter un élément anti-écartement (tirant ou filin métallique) entre les brancards. En outre, la structure du bouclier 4 et du cadre structurel 2 permettent d'assurer un comportement efficace du module de face avant 1 en cas de choc, quel que soit le type de choc. L'absorption d'énergie en cas de choc est ainsi optimisée.

## Revendications

1. Module de face avant (1) pour véhicule automobile du type destiné à être fixé sur des brancards et des prolonges de berceau du châssis du véhicule automobile, ledit module comprenant un cadre structurel (2) en matériau plastique comprenant au moins une traverse inférieure (8) et des montants verticaux (10, 12), chacun desdits montants (10, 12) formant, sur au moins une partie de sa hauteur un élément déformable d'absorption d'énergie (14), le module comprenant en outre un bouclier (4) en matériau plastique, conformé pour épouser la forme d'une peau de bouclier et disposé contre le cadre structurel (2), ledit bouclier (4) comprenant une traverse supérieure (34) et une traverse inférieure (36) reliées entre elles par des poutres de liaison verticales (38), les traverses supérieure (34) et inférieure (36) présentant chacune une partie centrale (48) et deux parties latérales (50) disposées de part et d'autre de la partie centrale (48), lesdites traverses (34, 36) comprenant une pluralité de nervures (52), **caractérisé en ce que** la concentration de nervures (52) dans la partie centrale (48) de la traverse supérieure (34) et/ou de la traverse inférieure (36) est supérieure à la concentration de nervures (52) de chaque partie latérale (50) de la traverse supérieure (34) et/ou de la traverse inférieure (36).

2. Module de face avant selon la revendication 1, **caractérisé en ce que** les nervures (52) définissent des alvéoles (54), au moins une partie des alvéoles (54) traversant longitudinalement la traverse supérieure (34) et la traverse inférieure (36).

3. Module de face avant selon la revendication 1 ou 2, **caractérisé en ce que** la partie centrale (48) de la traverse supérieure (34), respectivement de la traverse inférieure (36), s'étend sur une largeur sensiblement comprise entre 400 mm et 600 mm au centre de la traverse supérieure (34), respectivement de la traverse inférieure (36).

4. Module de face avant selon l'une quelconque des revendications 1 à 3, **caractérisé en ce que** les nervures (52) de la partie centrale (48) de la traverse supérieure (34) et/ou inférieure (36) sont espacées d'une distance sensiblement comprise entre 45 mm et 90 mm et les nervures (52) des parties latérales (50) de la traverse supérieure (34) et/ou inférieure (36) sont espacées d'une distance sensiblement comprise entre 60 mm et 120 mm.

5. Module de face avant selon l'une quelconque des revendications 1 à 4, **caractérisé en ce que** les poutres de liaison verticales (38) présentent une structure alvéolaire formée d'alvéoles (60, 62) s'étendant longitudinalement au travers des poutres (38) et débouchant sur la face arrière (42) et/ou avant (39) du bouclier (4).

6. Module de face avant selon la revendication 5, **caractérisé en ce que** chaque poutre de liaison (38) comprend des premières alvéoles (60) borgnes, fermées du côté de la face arrière (42) et ouvertes du côté de la face avant (39), et des deuxième alvéoles (62) borgnes ouvertes du côté de la face arrière (42) et fermée du côté de la face avant (39).

7. Module de face avant selon l'une quelconque des revendications 1 à 6, **caractérisé en ce qu'**il comprend en outre deux platines métalliques rigides (16), dont une face est destinée à s'appuyer sur des brancards et des prolonges de berceau du châssis du véhicule automobile, les montants verticaux du cadre structurel (2) étant disposés contre l'autre face desdites platines (16).

8. Module de face avant selon l'une quelconque des revendications 1 à 7, **caractérisé en ce que** la face avant (39) du bouclier (4) est pourvue d'une pluralité de moyens de fixation permettant la fixation d'une peau de bouclier et/ou d'accessoires du véhicule automobile sur ledit bouclier (4).

9. Module de face avant selon l'une quelconque des revendications 1 à 8, **caractérisé en ce que** le bouclier (4) est monobloc.

10. Module de face avant selon l'une quelconque des revendications 1 à 9, **caractérisé en ce que** les traverses supérieure (34) et inférieure (36) du bouclier (4) comprennent au moins une partie faisant saillie vers l'avant par rapport aux poutres de liaison verticales (38).

11. Véhicule automobile comprenant un châssis pourvu de brancards et de prolonges de berceau, **caractérisé en ce qu'**un module de face (1) avant selon l'une quelconque des revendications 1 à 10 est fixé auxdits brancards et auxdites prolonges de berceau.

## Claims

1. Motor vehicle front-end panel assembly (1) of the type fixed to side struts and cradle extensions of a motor vehicle chassis, said assembly comprising a plastic material structural frame (2) comprising at least a lower cross member (8) and vertical struts (10, 12), each of said struts (10, 12) forming, over at least a portion of its height, a deformable energy absorption component (14), the assembly further comprising a plastic material bumper (4) formed so as to match the shape of a bumper skin and arranged against the structural frame (2), said bumper (4) comprising an upper cross member (34) and a lower cross member (36) interconnected via vertical connecting beams (38), the upper (34) and lower (36) cross members each having a central portion (48) and two lateral portions (50) arranged on either side of the central portion (48), said cross members (34, 36) comprising a plurality of ribs (52), **characterised in that** the concentration of ribs (52) in the central portion (48) of the upper cross member (34) and/or of the lower cross member (36) is greater than the concentration of ribs (52) of each lateral portion (50) of the upper cross member (34) and/or of the lower cross member (36).

2. Front-end panel assembly according to claim 1, **characterised in that** the ribs (52) define cells (54), at least some of the cells (54) passing longitudinally through the upper cross member (34) and the lower cross member (36).

3. Front-end panel assembly according to either claim 1 or claim 2, **characterised in that** the central portion (48) of the upper cross member (34), or the lower cross member (36), extends over a width of substantially between 400 mm and 600 mm at the centre of the upper cross member (34), or at that of the lower cross member (36) respectively.

4. Front-end panel assembly according to any one of claims 1 to 3, **characterised in that** the ribs (52) of the central portion (48) of the upper (34) and/or the lower (36) cross member are spaced at a distance of substantially between 45 mm and 90 mm and the ribs (52) of the lateral portions (50) of the upper (34) and/or lower (36) cross member are spaced at a distance of substantially between 60 mm and 120 mm.

5. Front-end panel assembly according to any one of claims 1 to 4, **characterised in that** the vertical connecting beams (38) have a cellular structure consisting of cells (60, 62) extending longitudinally through the beams (38) and opening onto the rear (42) and/or front (39) face of the bumper (4).

6. Front-end panel assembly according to claim 5, **characterised in that** each connecting beam (38) comprises first blind cells (60), closed on the rear face side (42) and open on the front face side (39), and second blind cells (62) open on the rear face side (42) and closed on the front face side (39).

7. Front-end panel assembly according to any one of claims 1 to 6, **characterised in that** it further comprises two rigid metal plates (16), of which one face is pressed onto side struts and cradle extensions of the motor vehicle chassis, the vertical struts of the structural frame (2) being arranged against the other face of said plates (16).

8. Front-end panel assembly according to any one of claims 1 to 7, **characterised in that** the front face (39) of the bumper (4) is equipped with a plurality of fixing means enabling a bumper skin and/or motor vehicle accessories to be fixed to said bumper (4).

9. Front-end panel assembly according to any one of claims 1 to 8, **characterised in that** the bumper (4) is formed in one piece.

10. Front-end panel assembly according to any one of claims 1 to 9, **characterised in that** the upper (34) and lower (36) cross members of the bumper (4) comprise at least a portion projecting in a forward direction relative to the vertical connecting beams (38).

11. Motor vehicle comprising a chassis equipped with side struts and cradle extensions, **characterised in that** a front-end panel assembly (1) according to any one of claims 1 to 10 is is fixed to said side struts and to said cradle extensions.

## Patentansprüche

1. Vorderseitenmodul (1) für Kraftfahrzeug des Typs, das dazu bestimmt ist, an Längsträgern und Verlängerungen der Wiege des Chassis des Kraftfahrzeugs befestigt zu werden, wobei das Modul einen Strukturrahmen (2) aus Kunststoff umfasst, der wenigstens eine untere Querstrebe (8) und vertikale Stützen (10, 12) aufweist, wobei jede der Stürzen (10, 12) wenigstens auf einem Teil ihrer Höhe ein verformbares Energieabsorptionselement (14) bildet, wobei das Modul außerdem einen Stoßfänger (4) aus Kunststoff umfasst, der so beschaffen ist, dass er die Form einer Stoßfängerhaut besitzt, und an dem Strukturrahmen (2) angeordnet ist, wobei der Stoßfänger (4) eine obere Querstrebe (34) und eine untere Querstrebe (36) aufweist, die miteinander durch vertikale Verbindungsträger (38) verbunden sind, wobei der obere Querträger (34) und der untere Querträger (36) jeweils einen Mittelteil (48) und zwei seitliche Teile (50), die beiderseits des Mittelteils (48) angeordnet sind, aufweisen, wobei die Querstreben (34, 36) mehrere Stege (52) aufweisen, **dadurch gekennzeichnet, dass** die Konzentration der Stege (52) im Mittelteil (48) der oberen Querstrebe (34) und/oder der unteren Querstrebe (36) größer ist als die Konzentration der Stege (52) in jedem seitlichen Teil (50) der oberen Querstrebe (34) und/oder der unteren Querstrebe (36).

2. Vorderseitenmodul nach Anspruch 1, **dadurch gekennzeichnet, dass** die Stege (52) Waben (54) definieren, wobei wenigstens ein Teil der Waben (54) longitudinal durch die obere Querstrebe (34) und die untere Querstrebe (36) verläuft.

3. Vorderssitenmodul nach Anspruch 1 oder 2, **dadurch gekennzeichnet, dass** sich der Mittelteil (48) der oberen Querstrebe (34) bzw. der unteren Querstrebe (36) in der Mitte der oberen Querstrebe (34) bzw. der unteren Querstrebe (36) über eine Breite erstreckt, die im Wesentlichen im Bereich von 400 mm bis 600 mm liegt.

4. Vorderseitenmodul nach einem der Ansprüche 1 bis 3, **dadurch gekennzeichnet, dass** die Stege (52) des Mittelteils (48) der oberen Querstrebe (34) und/oder der unteren Querstrebe (36) um eine Strecke beabstandet sind, die im Wesentlichen im Bereich von 45 mm bis 90 mm liegt, und die Stege (52) der seitlichen Teile (50) der oberen Querstrebe (34) und/oder der unteren Querstrebe (36) um eine Strecke beabstandet sind, die im Wesentlichen im Bereich von 60 mm bis 120 mm liegt.

5. Vorderseitenmodul nach einem der Ansprüche 1 bis 4, **dadurch gekennzeichnet, dass** die vertikalen Verbindungsträger (38) eine Wabenstruktur aufweisen, die aus Waben (60, 62) gebildet ist, die sich in Längsrichtung durch die Träger (38) erstrecken und in die hintere Fläche (42) und/oder in die vordere Fläche (39) des Stoßfängers (4) münden.

6. Vorderseitenmodul nach Anspruch 5, **dadurch gekennzeichnet, dass** jeder Verbindungsträger (38) erste Blindwaben (60), die auf Seiten der hinteren Fläche (42) verschlossen und auf Seiten der vorderen Fläche (39) offen sind, und zweite Blindwaben (62), die auf Seiten der hinteren Fläche (42) offen sind und auf Seiten der vorderen Fläche (39) geschlossen sind, umfasst.

7. Vorderseitenmodul nach einem der Ansprüche 1 bis 6, **dadurch gekennzeichnet, dass** es außerdem zwei starre Metallplatten (16) umfasst, wovon eine Fläche dazu bestimmt ist, sich auf den Längsträgern und den Verlängerungen der Wiege des Chassis des Kraftfahrzeugs abzustützen, wobei die vertikalen Streben des Strukturrahmens (2) an der anderen Fläche dieser Platten (16) angeordnetsind.

8. Vorderseitenmodul nach einem der Ansprüche 1 bis 7, **dadurch gekennzeichnet, dass** die vordere Fläche (39) des Stoßfängers (4) mit mehreren Befestigungsmitteln versehen ist, die die Befestigung einer Stoßfängerhaut und/oder von Zubehör des Kraftfahrzeugs am Stoßfänger (4) ermöglichen.

9. Vorderseitenmodul nach einem der Ansprüche 1 bis 8, **dadurch gekennzeichnet, dass** der Stoßfänger (4) einteilig ist.

10. Vorderseitenmodul nach einem der Ansprüche 1 bis 9, **dadurch gekennzeichnet, dass** die obere Querstrebe (34) und die untere Querstrebe (36) des Stoßfängers (4) wenigstens einen Teil aufweisen, der in Bezug auf die vertikalen Verbindungsträger (38) nach vorn vorsteht.

11. Kraftfahrzeug, das ein Chassis aufweist, das mit Längsträgern und Verlängerungen der Wiege versehen ist, **dadurch gekennzeichnet, dass** ein Vorderseitenmodul (1) nach eine der Ansprüche 1 bis 10 an den Längsträgern und den Verlängerungen der Wiege befestigt ist.
